# EUROPÄISCHE PATENTANMELDUNG

(11) **EP 4 793 527 A1**
(43) Veröffentlichungstag der Anmeldung: **19.08.2026**
(21) Anmeldenummer: 25157815.9
(22) Anmeldetag: 13.02.2025
(51) Int. Cl.: F16K 11/078, F16K 11/00

(54) **EINHANDHEBELKARTUSCHE**

(71) Anmelder: Flühs Drehtechnik GmbH, 58515 Lüdenscheid (DE)
(72) Erfinder: Klundt, Peter, 58553 Halver (DE); Lange, Lutz, 58511 Lüdenscheid (DE)
(74) Vertreter: Patentanwälte Dörner & Kötter PartG mbB

(57) **Zusammenfassung**

Die Erfindung betrifft eine Einhandhebelkartusche, umfassend ein Kopfstück, das ein Bodenstück aufnimmt, sowie eine Scheibensteuerung mit einer Steuerscheibe, die über eine Spindel drehbar und/oder verschiebbar angeordnet ist, wobei die Spindel über eine durch diese geführte Achse (23) in einer Spindelaufnahme schwenkbar gelagert ist, die an zwei diametral gegenüberliegenden Seiten der Spindelaufnahme mit jeweils eine Endabschnitt (231) durch diese heraustritt, wobei die Spindelaufnahme in dem Kopfstück drehbar gelagert ist, wobei in dem Kopfstück wenigstens ein radial nach innen ragender Anschlagsteg (12) angeordnet ist, durch den zwei Anschläge (121) gebildet sind, an denen die Achse (23) in einer Drehstellung der mit der Spindel verbundenen Spindelaufnahme mit einem Endabschnitt (231) anschlägt.

## Beschreibung

Die Erfindung betrifft eine Einhandhebelkartusche nach dem Oberbegriff des Patentanspruchs 1.

In Sanitärarmaturen werden häufig als Mischerkartuschen ausgeführte Einhandhebelkartuschen eingesetzt, in denen eine Steuerscheibe sowie eine eine Durchlassscheibe aufweisende Scheibensteuerung angeordnet ist, welche derart bedienbar ist, dass sowohl die Wassermenge als auch die Wassertemperatur über ein und denselben Hebel steuerbar ist. Dabei sind Kopfstück und Spindel oftmals aus Metall, insbesondere aus Messing hergestellt, während die Spindelaufnahme als Kunststoffspritzgussteil hergestellt ist. Bei einer drehbar und schwenkbar gelagerten Spindel ist die Spindel in der Spindelaufnahme über eine Achse schwenkbar gelagert, wobei die Spindelaufnahme in dem Kopfstück drehbar gelagert ist. Die Achse ist hierbei durch die Spindelaufnahme hindurchgeführt und ragt mit ihren beiden Endabschnitten jeweils in ein hierzu in das Kopfstück eingebrachtes Langloch. Die Spindelaufnahme ist so über die Achse in dem Langloch in ihrem Drehwinkel begrenzt. Eine derartige Einhandhebelkartusche ist beispielsweise in der EP 3 064 812 A1 beschrieben.

Bei der Auslegung von Sanitärarmaturen wird zunehmend gefordert, das Mischwasser über eine Einhandhebelkartusche möglichst weit oben einem Wasserauslauf zuzuführen. Hierzu ist die vorbekannte Einhandhebelkartusche nicht geeignet, da das Wasser, das hierzu von der Einhandhebelkartusche in den diese aufnehmenden Raum geleitet wird, über die Langlöcher in den oberen Bereich des Kopfstücks eindringen kann. Vielmehr ist hierzu eine geschlossene Mantelfläche des Kopfstücks der Einhandhebelkartusche erforderlich.

In der EP 3 244 107 A1 ist eine Einhandhebelkartusche gezeigt, bei der eine Spindelaufnahme in einem Kopfstück drehbar angeordnet ist, durch die eine Spindel geführt ist, die in der Spindelführung über eine Achse schwenkbar gelagert ist. An der Spindelaufnahme ist außen ein Anschlagstück angeordnet, dass in einer Drehstellung der mit der Spindel verbundenen Spindelaufnahme an einen innen in dem Kopfstück hierzu angeordneten Vorsprung anliegt, wodurch der Drehwinkel der Spindel beschränkt ist. Die Mantelfläche des Kopfstücks ist geschlossen ausgebildet.

Nachteilig an dieser vorbekannten Einhandhebelkartusche ist jedoch, dass durch eine Drehung der Spindel beim Anschlag des Anschlagstücks der Spindelaufnahme bedingt durch den Abstand zwischen dem Einleitungspunkt des Drehmoments und des Anlagepunkts des Anschlagstücks an dem Vorsprung des Kopfstücks eine Verwindung der aus Kunststoff ausgebildeten Spindelaufnahme im Bereich des Anschlagstücks bewirkt ist, was ein Verklemmen der Spindelaufnahme in dem Kopfstück zur Folge haben kann.

Hier will die Erfindung Abhilfe schaffen. Der Erfindung liegt die Aufgabe zu Grunde, eine Einhandhebelkartusche der vorstehenden Art bereitzustellen, deren Kopfstück im Bereich der Schwenkachse der Spindel eine geschlossene Mantelfläche aufweist und bei der ein Verklemmen der Spindelaufnahme vermieden ist. Gemäß der Erfindung wird diese Aufgabe durch eine Einhandhebelkartusche mit den Merkmalen des kennzeichnenden Teils des Patentanspruchs 1 gelöst.

Mit der Erfindung ist eine Einhandhebelkartusche bereitgestellt, deren Kopfstück im Bereich der Schwenkachse der Spindel eine geschlossene Mantelfläche aufweist und bei der ein Verklemmen der Spindelaufnahme vermieden ist. Dadurch, dass in dem Kopfstück wenigstens ein radial nach innen ragender Anschlagsteg angeordnet ist, durch den zwei Anschläge gebildet sind, an denen die Achse in einer Drehstellung der mit der Spindel verbundenen Spindelaufnahme mit einem Endabschnitt anschlägt, ist eine direkte Einleitung eines auf die Spindel aufgebrachten Drehmomentes über die Achse in das Kopfstück erzielt. Eine Beeinträchtigung der Spindelaufnahme ist hierdurch vermieden. Bevorzugt weist das Kopfstück eine geschlossene Mantelfläche auf.

In Weiterbildung der Erfindung weist die Spindelaufnahme an ihrer Mantelfläche zwei parallel beabstandet zueinander angeordnete, zumindest bereichsweise umlaufende, sich radial nach außen erstreckende Vorsprünge auf, die eine Nut begrenzen, in der die Endabschnitte der Achse angeordnet sind und in welche die Anschlagstege des Kopfstücks hineinragen. Hierdurch ist eine Führung der drehbar in dem Kopfstück gelagerten Spindelaufnahme entlang des wenigstens einen Anschlagsteges bis zum Anschlag eines Endabschnitts der Achse erzielt.

In Ausgestaltung der Erfindung ist einer der beiden Vorsprünge durch einen umlaufenden Kragen gebildet, der wenigstens einen, bevorzugt zwei beabstandet zueinander angeordnete durchmesserreduzierte Abschnitte aufweist, deren Außendurchmesser vorzugsweise dem Außendurchmesser der Nut entspricht. Hierdurch ist ein Durchtritt des wenigstens einen Anschlagstegs des Kopfstücks im Zuge der Montage der Spindelaufnahme ermöglicht.

In weiterer Ausgestaltung der Erfindung ist die Spindelaufnahme als im Wesentlichen zylinderförmiges Kunststoffspritzgussteil ausgebildet. Hierdurch ist eine elastische Lagerung der Spindel erzielt, wodurch der Handhabungskomfort der Einhandhebelkartusche verbessert ist.

In Weiterbildung der Erfindung sind durch den der Steuerscheibe abgewandten, oberen Vorsprung der Spindelaufnahme wenigstens ein Schlitz, bevorzugt zwei Schlitze, besonders bevorzugt zwei Paare mit je zwei diametral gegenüberliegenden Schlitzen geführt, die sich bis zur Stirnseite der Spindelaufnahme erstrecken. Hierdurch sind elastische Abschnitte gebildet, wodurch mögliche durch Temperaturänderungen bedingte Spannungen, welche die Schwenkbewegung der Spindel in der Spindelaufnahme beeinträchtigen können, vermieden.

In Ausgestaltung der Erfindung ist an dem Kopfstück seiner der Spindel zugewandten Seite außen axial beabstandet zur Achse ein Dichtring, bevorzugt ein O-Ring angeordnet. Hierdurch ist bei Installation der Einhandhebelkartusche in eine Armatur eine Abdichtung gegenüber einer Befestigungsmutter erzielt. Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

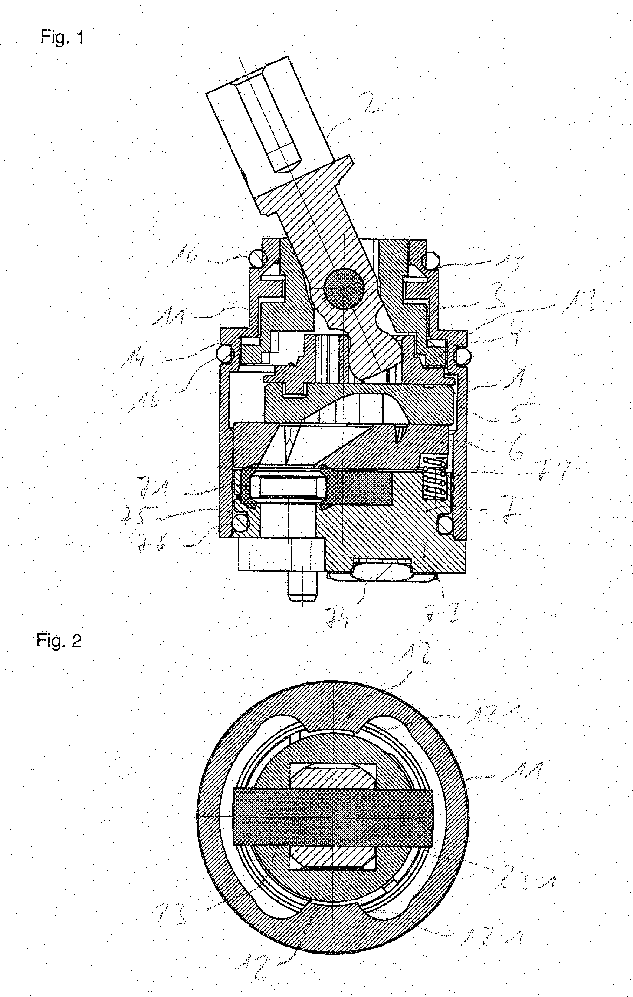

- Figur 1: die schematische Darstellung einer Einhandhebelkartusche im Längsschnitt;
- Figur 2: die Darstellung der Einhandhebelkartusche aus Figur 1 im Querschnitt durch die Achse;

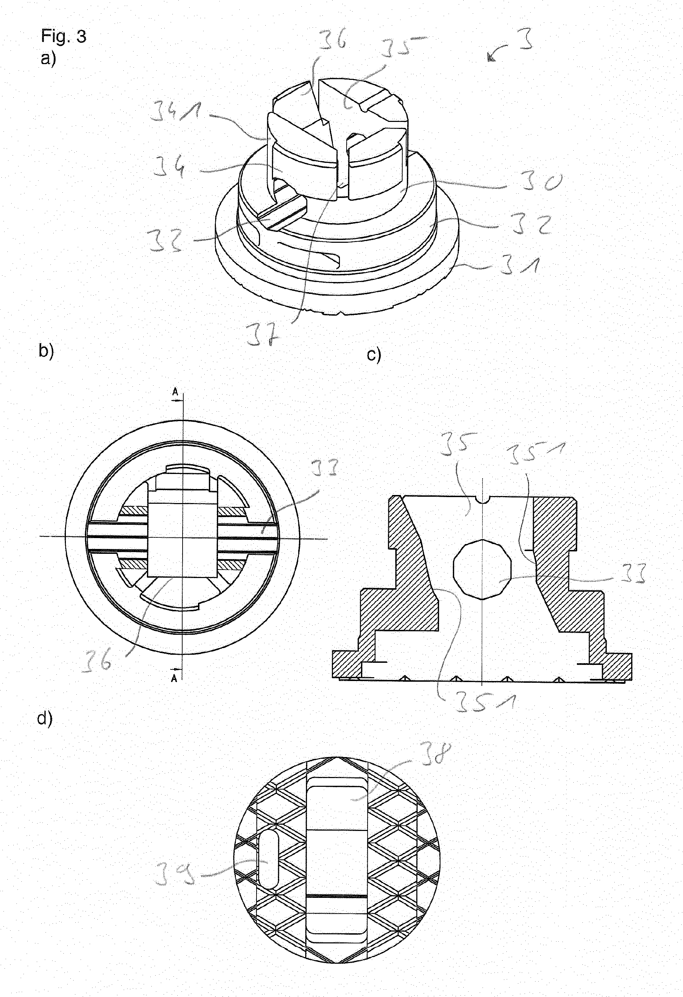

- Figur 3: die schematische Darstellung der Spindelaufnahme der Einhandhebelkartusche aus Figur 1
a) in räumlicher Ansicht;
b) in der Draufsicht;
c) im Längsschnitt;
d) in der Ansicht von unten;

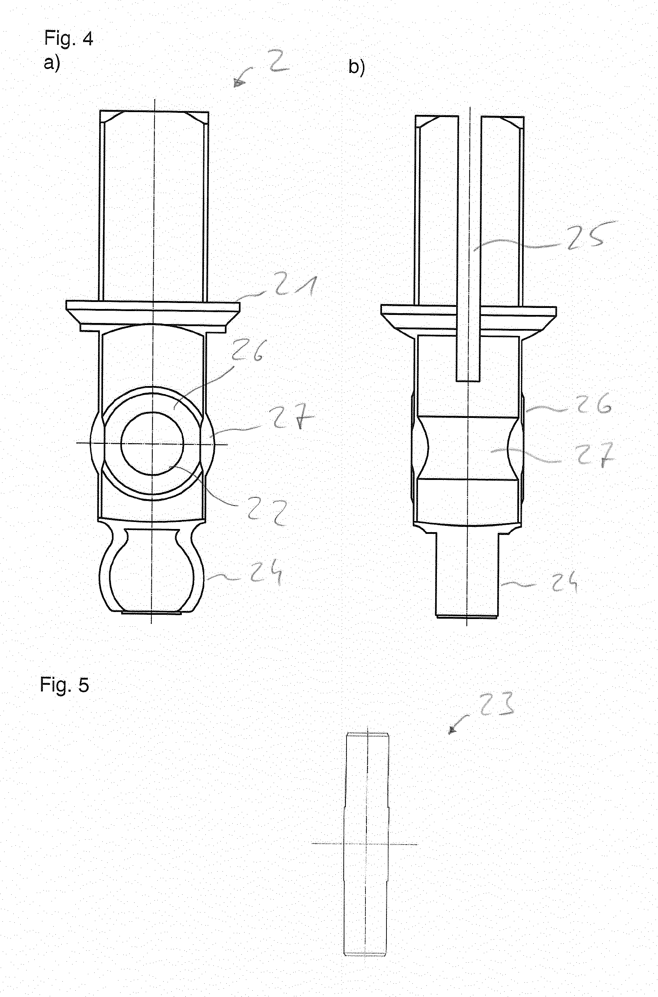

- Figur 4: die Spindel der Einhandhebelkartusche aus Figur 1
a) in der Seitenansicht;
b) in um 90° gedrehter Seitenansicht;
- Figur 5: die Achse der Spindel der Einhandhebelkartusche aus Figur 1;

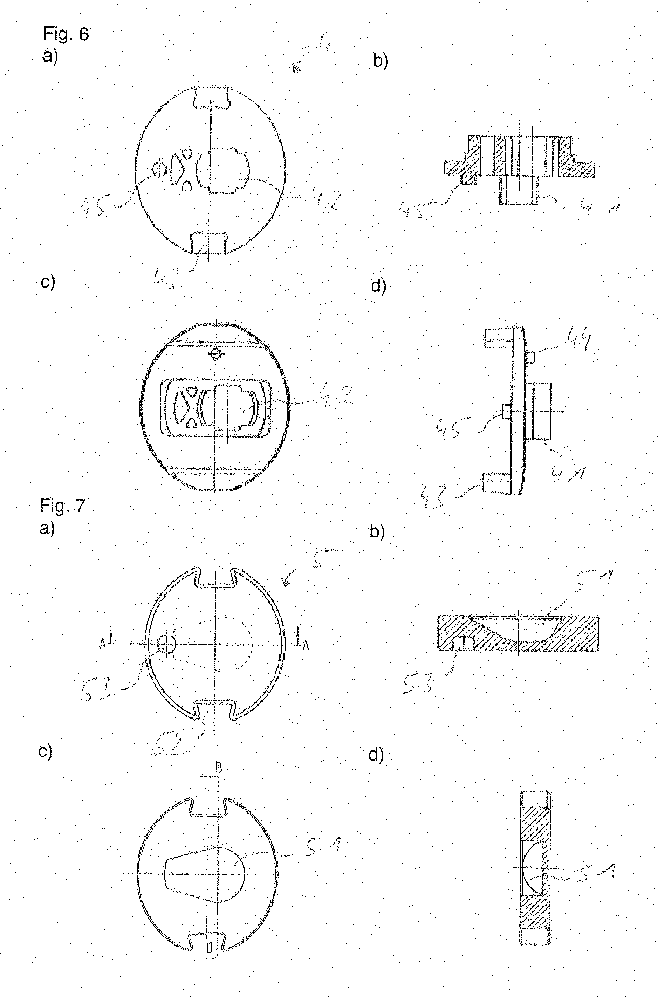

- Figur 6: die schematische Darstellung des Gleitstücks der Einhandhebelkartusche aus Figur 1
a) in der Ansicht von unten ;
b) im Längsschnitt ;
c) in der Draufsicht;
d) in der Seitenansicht;
- Figur 7: die Darstellung der Steuerscheibe der Einhandhebelkartusche aus Figur 1
a) in der Draufsicht;
b) im Querschnitt (Schnitt A-A);
c) in der Ansicht von unten;
d) im Querschnitt (Schnitt B-B);
- Figur 8: die Darstellung der Durchlassscheibe der Einhandhebelkartusche aus Figur 1
a) in der Draufsicht;
b) in der Ansicht von unten;
- Figur 9: die Darstellung des Bodenstücks der Einhandhebelkartusche aus Figur 1
a) in räumlicher Darstellung;
b) in der Ansicht von unten;
c) in der Draufsicht;

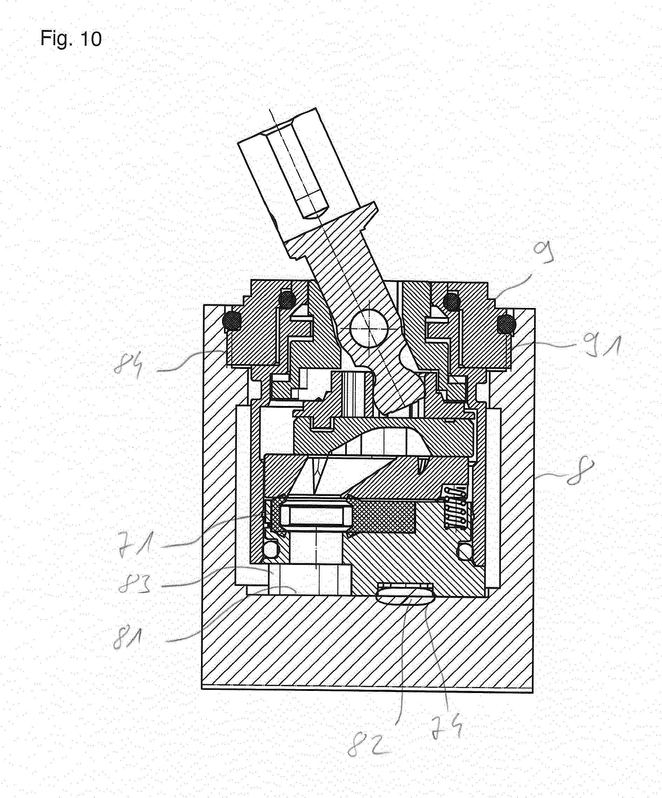

- Figur 10: die schematische Darstellung einer in einer Armatur installierter Einhandhebelkartusche gemäß Figur 1.

Die als Ausführungsbeispiel gewählte Einhandhebelkartusche besteht im Wesentlichen aus einem Kopfstück 1, in das eine Spindel 2 axial hineinragt, die in einer drehbar gelagerten Spindelaufnahme 3 schwenkbar gelagert ist und die in ein Gleitstück 4 eingreift, das mit einer Steuerscheibe 5 verbunden ist, die mit einer Durchlassscheibe 6 korrespondiert, an die sich ein Bodenstück 7 anschließt, welches ein Dichtungsformteil 71 aufnimmt.

Das Kopfstück 1 ist hülsenartig ausgebildet und im Ausführungsbeispiel als Messingdrehteil hergestellt, das eine geschlossene Mantelfläche ohne Durchtrittsfenster aufweist. An seinen dem Bodenstück 8 abgewandten Ende weist das Kopfstück 1 einen durchmesserreduzierten Abschnitt 11 auf, in dem diametral gegenüberliegend zwei sich radial nach innen erstreckende Anschlagstege 12 angeordnet sind, die der Drehbegrenzung der Spindelaufnahme 3 dienen. Unterhalb des durchmesserreduzierten Abschnitts 11 ist innen ein Absatz 13 ausgebildet. Außen ist im Bereich des Absatzes 13 eine erste Ringnut 14 zur Aufnahme eines O-Rings 16 angeordnet. Endseitig des durchmesserreduzierten Abschnitts 11 ist außen eine zweite Ringnut 15 zur Aufnahme eines weiteren O-Rings 16 angeordnet.

Die Spindel 2 ist im Ausführungsbeispiel im Wesentlichen quaderförmig ausgebildet. Etwa mittig ist an der Spindel 2 ein kreisringförmiger koaxialer Kragen 21 zur Aufnahme eines - nicht dargestellten - Bedienteils angeformt. Oberhalb des Kragens 21 ist in die Spindel 2 ein bis über den Kragen 21 hinaus geführter Schlitz 25 eingebracht. Unterhalb des Kragens 21 ist durch die Spindel 2 eine Bohrung 22 zur Aufnahme einer Achse 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist. An der Spindel 2 ist auf zwei gegenüberliegenden Seiten jeweils ein hervorstehender kreisringförmiger erster Ansatz 26 angeordnet, durch den die Bohrung 22 hindurchgeführt ist. Im Ausführungsbeispiel weisen die beiden ersten Ansätze 26 jeweils eine Dicke von 0,3 mm auf. Weiterhin ist an der Spindel 2 auf den beiden übrigen, längs der Bohrung verlaufenden Seiten jeweils ein an diese ebenfalls einteilig angeformter zweiter Ansatz 27 angeordnet. Der zweite Ansatz 27 ist zylindersegmentförmig ausgebildet und konzentrisch zur Bohrung 22 angeordnet

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein erster Absatz 31 angeformt, an den sich axial beabstandet ein zweiter Absatz 32 anschließt. Oberhalb des zweiten Absatzes 32 ist durch die Spindelaufnahme 3 eine radiale Durchgangsbohrung 33 zur Aufnahme der Achse 23 für die Spindel 2 eingebracht. Die Achse 23 ist in die Durchgangsbohrung 33 eingesetzt, wobei sie aus der Durchgangsbohrung 23 beidseitig mit einem Endabschnitt 231 hinausragt.

Beabstandet zu dem zweiten Absatz 32 ist an der Spindelaufnahme umlaufend ein Kragen 34 angeordnet, der durch Schlitze 37 mehrfach unterbrochen ist und durch den zusammen mit dem zweiten Absatz 32 eine Nut 30 zur Aufnahme der Anschlagstege 12 des Kopfstücks 1 begrenzt ist. In dieser Nut 30 mündet die Durchgangsbohrung 33, wobei die aus der Durchgangsbohrung 33 hinausragenden Endabschnitte 231 der Achse 23 in der Nut 30 angeordnet sind. Im Ausführungsbeispiel ragen die in der Nut 30 angeordneten Endabschnitte 231 etwas aus der Nut 30 hervor.

Im Gegenuhrzeigersinn vor der Durchbohrung 33 weist der Kragen 34 an zwei gegenüberliegenden Seiten jeweils einen durchmesserreduzierten Abschnitt 341 auf, der sich geringfügig, vorliegend etwa ein Sechstel des Durchgangsbohrungsdurchmessers, in den Bereich der Durchgangsbohrung 33 erstreckt. Der Außendurchmesser der beiden durchmesserreduzierten Abschnitte 341 entspricht dem Durchmesser der Nut 30. Die durchmesserreduzierten Abschnitte 341 ermöglichen den Durchtritt der Anschlagstege 12 des Kopfstücks 1 im Zuge der Montage der Spindelaufnahme 3 in dem Kopfstück 1.

Axial ist durch die Spindelaufnahme 3 eine Durchführung 35 für die Spindel 2 angeformt, welche seitliche Anschläge 36 aufweist, durch die der Schwenkradius der Spindel 2 um die Achse 23 begrenzt ist. Die Durchführung 35 weist einen im Wesentlichen rechteckigen Querschnitt auf. An den vier Ecken des im Wesentlichen quadratischen axialen Durchgangs der Durchführung 35 ist in die Spindelaufnahme 3 jeweils ein einen Spalt ausbildender Schlitz 37 angeordnet, der sich jeweils durch den Kragen 34 hinweg bis in die Nut 30 erstreckt. Durch die Schlitze 37 sind vier elastische Abschnitte gebildet, wodurch mögliche durch Temperaturänderungen bedingte Spannungen, welche die Schwenkbewegung der Spindel beeinträchtigen können, vermieden sind.

In der Durchführung 35 sind gegenüberliegend zwei Einwölbungen 351 vorhanden, die bereichsweise konzentrisch zur Durchgangsbohrung 33 verlaufen und an denen die zweiten Ansätze 27 der Spindel 2 während einer Schwenkbewegung kontinuierlich mit Vorspannung anliegen.

Die Durchführung 35 mündet in einer im Wesentlichen quaderförmig ausgebildeten Aufnahme 38 für das Gleitstück 4. Beabstandet zu der Aufnahme 38 ist in der Spindelaufnahme 3 eine im Wesentlichen ovale Einbuchtung 39 zur Aufnahme des Führungsstiftes 44 des Gleitstücks 4 eingebracht.

Das als Kunststoffspritzgussteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 38 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. Seitlich des Formstücks 41 ist ein Führungsstift 44 zum Eingriff in die Einbuchtung 38 der Spindelaufnahme 3 angeformt. An seiner dem Formstück 41 entgegengerichteten Unterseite sind an dem Gleitstück 4 außen gegenüberliegend zwei axiale Stege 43 zur Aufnahme der Steuerscheibe 5 angeformt. Weiterhin ist an der Unterseite ein Passstift 45 zum Eingriff in die Passbohrung 53 der Steuerscheibe 5 angeformt, wodurch eine lagegerechte Orientierung der Steuerscheibe 5 bei der Montage gewährleistet ist.

Die Steuerscheibe 5 ist kreisförmig ausgebildet und als Keramikteil hergestellt. An ihrer der Durchlassscheibe 6 zugewandten Seite weist die Steuerscheibe 5 eine mittig angeordnete, eiförmige Einbuchtung 51 auf. Auf ihrer der Einbuchtung 51 entgegengesetzten Oberseite sind in der Steuerscheibe 5 diametral zueinander außen zwei Ausnehmungen 52 zur Aufnahme der Stege 43 des Gleitstücks 4 eingebracht. Weiterhin ist in der Steuerscheibe 5 an ihrer dem Gleitstück 4 zugewandten Seite eine Passbohrung 53 eingebracht. Über die Ausnehmungen 52 sowie die Passbohrung 53 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurchgeführt.

Das Bodenstück 7 ist im Wesentlichen zylinderförmig ausgebildet. An seiner der Durchlassscheibe 6 zugewandten Oberseite ist in dem Bodenstück 7 eine Aufnahme für das Dichtungsformteil 71 eingebracht. Beabstandet zu dem Dichtungsformteil 71 ist in dem Bodenstück 7 ein Federelement 72 angeordnet, das gegen die Durchlassscheibe 6 vorgespannt ist. An seiner dem Dichtungsformteil 71 gegenüberliegenden Seite ist an dem Bodenstück 7 ein Sockel 73 angeordnet, der sich über einen Teilbereich der Grundfläche erstreckt.

Außen ist in das Bodenstück 7 umlaufend eine Ringnut 75 zur Aufnahme eines O-Rings 76 eingebracht. Das Bodenstück 7 ist über den O-Ring 76 gegenüber dem Kopfstück 1 abgedichtet. Axial sind durch das Bodenstück 7 drei Kanäle 77 geführt, die von dem ersten Dichtungsformteil 71 dichtend eingerahmt sind und die mit den Einlass- und Auslasskanälen 61, 62 der Durchlassscheibe 6 fluchten. Die mit den Einlasskanälen 61 der Durchlassscheibe 6 fluchtenden Kanäle 77 sind durch den Sockel 73 geführt. Diese beiden Kanäle 77 einrahmend ist in dem Sockel 73 ein zweites Dichtungsformteil 74 angeordnet. Der mit dem Auslasskanal 62 der Durchlassscheibe 6 fluchtende Kanal 77 mündet oberhalb des Sockels 73 neben diesem.

Die Spindel 2 ist in die Durchführung 35 der Spindelaufnahme 3 eingesetzt, wobei die an zwei gegenüberliegenden Seiten der Spindel 2 die Bohrung 22 einrahmend angeordneten kreisringförmigen ersten Ansätze 26 mit einer durch das Übermaß dieser Ansätze bedingten definierten Vorspannung an zwei gegenüberliegenden Innenwänden der Durchführung 35 anliegen. Dabei fluchten die Bohrungen 22 mit der Durchgangsbohrung 33 der Spindelaufnahme 3. Zugleich liegen die übrigen, sich in Längsrichtung der Bohrung 22 erstreckenden beiden Seiten der Spindel 2 mit ihren beiden zweiten Ansätzen 27 unter Vorspannung an den Einwölbungen 351 der Durchführung 35 an.

Durch die Durchgangsbohrung 33 der Spindelaufnahme 3 sowie der mit dieser fluchtenden Bohrung 22 ist die Achse 23 hindurchgeführt, wobei diese endseitig jeweils mit einem Endabschnitt 231 aus der Durchgangsbohrung 33 hinausragen. Über die Achse 23 ist die Spindel 2 in der Durchführung 35 bedingt durch die durch die axialen und radialen Vorspannungen verursachten Reibungskräfte mit einer definierten Schwergängigkeit schwenkbar. Ein Verklemmen der Spindel 2 in der Durchführung durch die Vorspannung oder durch Materialausdehnungen aufgrund von Temperaturschwankungen ist durch die durch die Schlitze 37 begrenzten elastischen Abschnitte verhindert.

Die Spindelaufnahme 3 ist im Zuge der Montage der Einhandhebelkartusche in das Kopfstück 1 in einer Drehposition eingesetzt, in der die Anschlagstege 12 über die durchmesserreduzierten Abschnitte 341 des Kragens 34 bewegt werden können. Die Anschlagstege 12 sind dabei innerhalb der Nut 30 angeordnet, in die auch die Achse 23 der Spindel 2 mit ihren aus der Spindelaufnahme 3 hinausragenden Endabschnitten 231 hineinragt. Die Spindelaufnahme 3 ist durch Aufbringen eines Drehmoments auf die Spindel 2 in beide Richtungen jeweils soweit drehbar, bis die beiden Endabschnitte 231 jeweils an einen Anschlag 121 eines Anschlagsteges 12 anliegt. Schlägt die Achse 23 mit ihren Endabschnitten 231 an die Anschlagstege 12 an, so wird das auf die Spindel 2 aufgebrachte Drehmoment über die Achse 23 direkt auf die Anschlagstege 12 übertragen. Eine Krafteinleitung in die Spindelaufnahme 3 erfolgt nicht.

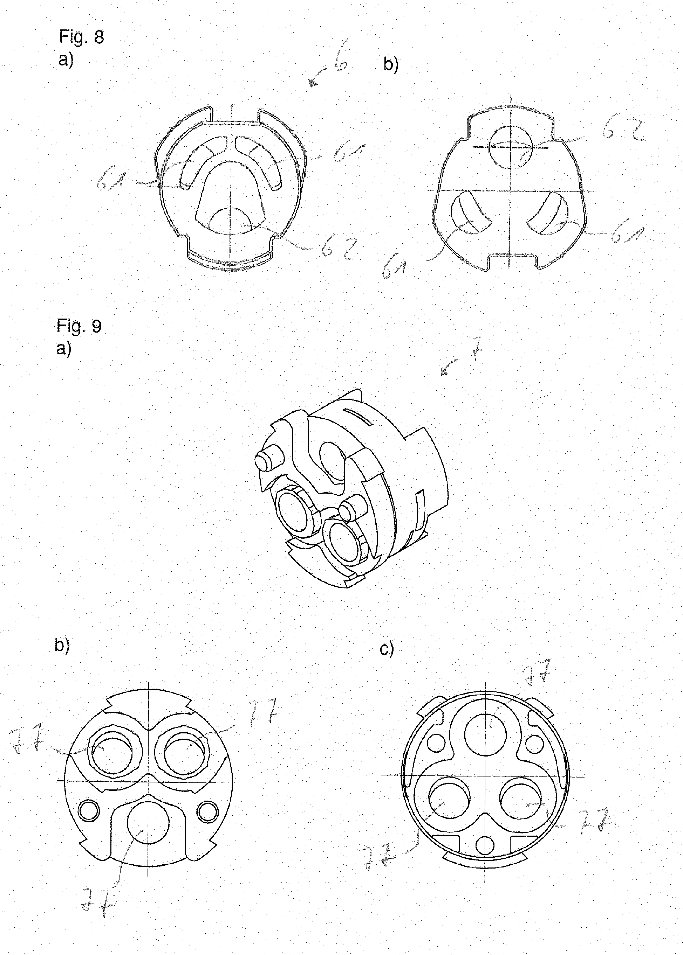

In Figur 9 ist eine Armatur 8 mit der vorstehend beschriebenen Einhandhebelkartusche gezeigt. Die Armatur 8 weist einen Ventilsitz 81 auf, in dem zwei Zulaufkanäle 82 für Warmwasser und Kaltwasser münden. Die Einhandhebelkartusche ist mit seinem Sockel 73 derart auf dem Ventilsitz 81 positioniert, dass die durch den Sockel 73 verlaufenden Kanäle 77 jeweils mit einem der beiden Zulaufkanäle 82 fluchtet. Der Sockel 73 liegt dabei mit dem zweiten Dichtungsformteil 74 auf dem Ventilsitz 81 auf, sodass die beiden Kanäle 77 dichtend mit dem Zulaufkanälen 82 verbunden sind. Der dritte, mit dem Auslasskanal 62 der Durchlassscheibe 6 fluchtende Kanal 77 mündet beabstandet zu dem Ventilsitz 81 in der diesen umgebenden Mischwasserkammer 83, die mit einem - nicht dargestellten - Wasserauslauf verbunden ist. Die Einhandhebelkartusche ist über einen Befestigungsschraubring 9 axial gegen den Ventilsitz 81 fixiert, der mit seinem Außengewinde 91 in ein hierzu in der Armatur 8 angeordnetes Innengewinde 84 eingeschraubt ist. Das Kopfstück 1 der Einhandhebelkartusche ist über den in der zweiten Ringnut 15 des Kopfstücks 1 angeordneten O-Ring 16 gegenüber dem Befestigungsschraubring abgedichtet. Bei entsprechender Positionierung der Steuerscheibe 5 durch die Spindel 2 auf der Durchlassscheibe 6 gelangt das aus dem Auslasskanal 62 der Durchlassscheibe 6 austretende Wasser durch den mit diesem fluchtenden Kanal 77 des Bodenstücks 7 durch die Mischwasserkammer 83 in den - nicht dargestellten - Wasserauslauf. Ein Eindringen des Wassers in das Kopfstück 1 ist verhindert.

## Patentansprüche

1. Einhandhebelkartusche, umfassend ein Kopfstück (1), das ein Bodenstück (7) aufnimmt, sowie eine Scheibensteuerung mit einer Steuerscheibe (5), die über eine Spindel (2) drehbar und/oder verschiebbar angeordnet ist, wobei die Spindel (2) über eine durch diese geführte Achse (23) in einer Spindelaufnahme (3) schwenkbar gelagert ist, die an zwei diametral gegenüberliegenden Seiten der Spindelaufnahme (3) mit jeweils eine Endabschnitt (231) durch diese heraustritt, wobei die Spindelaufnahme (3) in dem Kopfstück (1) drehbar gelagert ist, **dadurch gekennzeichnet, dass** in dem Kopfstück (1) wenigstens ein radial nach innen ragender Anschlagsteg (12) angeordnet ist, durch den zwei Anschläge (121) gebildet sind, an denen die Achse (23) in einer Drehstellung der mit der Spindel (2) verbundenen Spindelaufnahme (3) mit einem Endabschnitt (231) anschlägt.

2. Einhandhebelkartusche nach Anspruch 1, **dadurch gekennzeichnet, dass** das Kopfstück (1) eine geschlossene Mantelfläche aufweist.

3. Einhandhebelkartusche nach Anspruch 1 oder 2, **dadurch gekennzeichnet, dass** die Spindelaufnahme (3) an ihrer Mantelfläche zwei parallel beabstandet zueinander angeordnete, zumindest bereichsweise umlaufende sich radial nach außen erstreckende Vorsprünge aufweist, die eine Nut (30) begrenzen, in der die Endabschnitte (231) der Achse (23) angeordnet sind und in welche die Anschlagstege (12) des Kopfstücks (1) hineinragen.

4. Einhandhebelkartusche nach Anspruch 3, **dadurch gekennzeichnet, dass** einer der beiden Vorsprünge durch einen umlaufenden Kragen (34) gebildet ist, der wenigstens einen, bevorzugt zwei beabstandet zueinander angeordnete durchmesserreduzierte Abschnitte (314) aufweist, deren Außendurchmesser vorzugsweise dem Außendurchmesser der Nut (30) entspricht.

5. Einhandhebelkartusche nach einem der vorgenannten Ansprüche, **dadurch gekennzeichnet, dass** die Spindelaufnahme (3) als im Wesentlichen zylinderförmiges Kunststoffspritzgussteil ausgebildet ist.

6. Einhandhebelkartusche nach einem der vorgenannten Ansprüche, **dadurch gekennzeichnet, dass** durch den der Steuerscheibe (5) abgewandten, oberen Vorsprung der Spindelaufnahme (3) wenigstens ein Schlitz, bevorzugt zwei Schlitze (37), besonders bevorzugt zwei Paare mit je zwei diametral gegenüberliegenden Schlitzen (37) geführt sind, die sich bis zur Stirnseite der Spindelaufnahme (3) erstrecken.

7. Einhandhebelkartusche nach einem der vorgenannten Ansprüche, **dadurch gekennzeichnet, dass** an dem Kopfstück (1) an seiner der Spindel (2) zugewandten Seite außen axial beabstandet zur Achse (23) ein Dichtring, bevorzugt ein O-Ring (16) angeordnet ist.
